# EUROPÄISCHE PATENTANMELDUNG

(11) **EP 0 618 663 A1**
(43) Veröffentlichungstag der Anmeldung: **05.10.1994**
(21) Anmeldenummer: 94103874.7
(22) Anmeldetag: 11.03.1994
(51) Int. Cl.: H02K 23/04, H02K 5/04, H02K 5/10

(54) **Permanenterregter Kleinmotor, insbesondere in geschlossener Bauart**

(30) Priorität: 27.03.1993 DE 4310047
(71) Anmelder: Licentia Patent-Verwaltungs-GmbH, D-60596 Frankfurt (DE)
(72) Erfinder: Schmidt, Burkhard, Ing. grad., D-26639 Wiesmoor (DE)
(74) Vertreter: Vogl, Leo, Dipl.-Ing.

(57) **Zusammenfassung**

Die Erfindung betrifft einen permanenterregten Kleinmotor, der auch in beengten Einbauräumen eine lange Lebensdauer gewährleistet. Dieses wird dadurch erreicht, daß das zylindrische Motorgehäuse aus einem, kurzen ersten Gehäuseteil (25), das den Teil der Rotorwelle (13) mit dem Kollektor (23) und die Bürstenbrücke (21) umschließt, und einen zu dem Durchmesser des ersten Gehäuseteiles (25) stark verminderten, längeren zylindrischen zweiten Gehäuseteil (7), das den Teil der Rotorwelle (13) mit dem Rotorblechpaket (17) einschließlich der Wicklungsköpfe (27) der Rotorwicklung (15) überdeckt, besteht.

## Beschreibung

Die Erfindung betrifft einen permanent erregten Kleinmotor der im Oberbegriff des Patentanspruchs 1 angegebenen Art.

Permanent erregte Kleinmotore werden heutzutage auf vielen technischen Gebieten eingesetzt, so z. B. auch im Kraftfahrzeugwesen als Antriebsmotor für Kühlerlüfter oder Servovorrichtungen. Die bekannten Motore mit hoher Leistung weisen entsprechend große Durchmesser auf, wodurch sich oft Einbauprobleme ergeben. Eine Verkleinerung des Durchmessers des Motorgehäuses führt zu einem beengten Bauraum für die Kohlebürsten und die Entstörbauteile und hierdurch damit zu einer höheren Wärmekonzentration. Außerdem können auch nur kürzere Kohlebürsten zum Einsatz kommen, wodurch die Lebensdauer des Motors ebenfalls verkürzt wird.

Der Erfindung liegt die Aufgabe zugrunde, einen leistungsfähigen permanenterregten Kleinmotor, insbesondere in geschlossener Bauart zu schaffen, der die oben genannten Nachteile vermeidet und auch eine lange Lebensdauer in beengten Einbauräumen z. B. im Kraftfahrzeugwesen gewährleistet. Auch soll ein neuer leistungsfähiger Kleinmotor durch Einsatz möglichst gleicher Bauteile von unterschiedlichen Motortypen einfach und billig herstellbar sein. Diese Aufgabe wird durch die im Patentanspruch 1 gekennzeichneten Merkmale gelöst.

Der erfindungsgemäße permanent erregte Kleinmotor zeichnet sich durch einen kompakten Aufbau aus, wobei Bauelemente bereits bewährter Motortypen eingesetzt werden. Dieses spart Entwicklungs- und Fertigungskosten und verkürzt die Erprobungszeit. Der Bauraum für die Kohlebürsten und die Entstörelemente und sonstigen Bauteile der Bürstenbrücke ist relativ groß, so daß keine störende Wärmekonzentration entstehen kann. Durch den größeren zur Verfügung stehenden Bauraum können auch längere Kohlebürsten eingesetzt werden, welche wiederum längere Wartungszeiten ermöglichen.

Weitere vorteilhafte Ausgestaltungen des Erfindungsgegenstandes sind den weiteren Unteransprüchen zu entnehmen.

Die Erfindung wird anhand von Ausführungsbeispielen im folgenden näher erläutert. Es zeigen:
- Figur 1: eine Seitenansicht eines ersten Ausführungsbeispiels des permanenterregten Kleinmotors, teilweise im Schnitt,
- Figur 2: eine Frontansicht auf das BS-Lagerschild und
- Figur 3: eine zweite Ausführungsform in Seitenansicht.

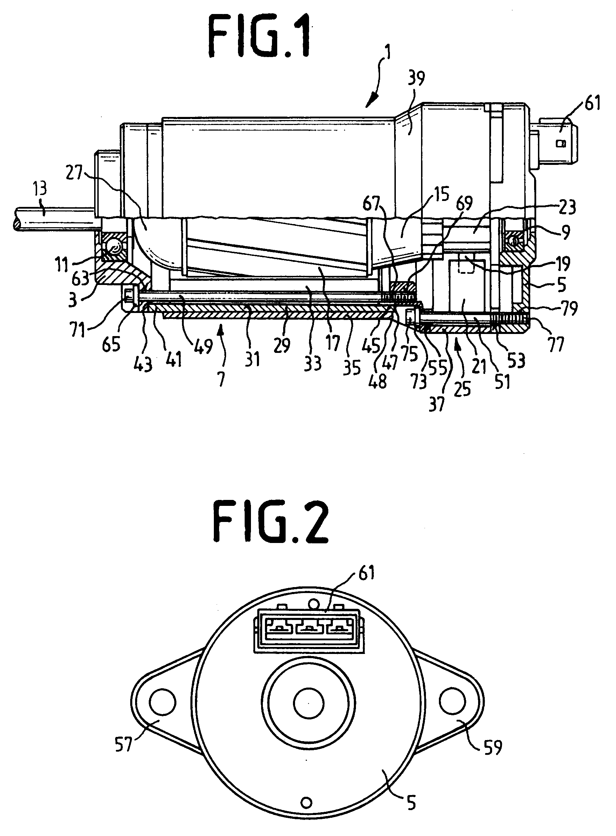

Die Figur 1 zeigt einen permanenterregten Kleinmotor 1, insbesondere in geschlossener Bauart mit einem nach außen geschlossenen, stirnseitig Lagerschilde 3, 5 aufnehmenden Gehäuse, welches eine zylindrische Form aufweist. Diese Lagerschilde 3, 5 weisen Kugellager 9, 11 zur Lagerung einer Rotorwelle 13 auf, welche ein mit einer Rotorwicklung 15 bewickeltes Rotorblechpaket 17 und einen mit verschiebbaren Bürsten 19 in einer Bürstenbrücke 21 zusammenwirkenden Kollektor 23 aufnimmt.

Das zylindrische Gehäuse besteht aus einem kurzen, ersten Gehäuseteil 25, das den Teil der Rotorwelle 13 mit dem Kollektor 23 und die Bürstenbrücke 21 umschließt, und einem zu dem Durchmesser des ersten Gehäuseteiles 25 stark verminderten, längeren zylindrischen zweiten Gehäuseteil 7, das den Teil der Rotorwelle 13 mit dem Rotorblechpaket 17 einschließlich der Wicklungsköpfe 27 der Rotorwicklungen 15 überdeckt. Das zweite Gehäuseteil 7 ist in einen inneren, an einer Stirnseite das AS-Lagerschild 3 aufnehmenden, ferromagnetischen Gehäusemantel 29, an dessen Innenumfangsfläche 31 die Dauermagnete 33 befestigt sind, und in einen außen aufgespannten Rückschlußmantel 35 aufgeteilt. Das erste Gehäuseteil 25 weist einen Gehäusemantel 37 auf, welcher an einem Ende durch das BS-Lagerschild 5 verschlossen ist und dessen anderes Ende über ein trichterförmig ausgebildetes Zwischenstück 39 mit dem dem AS-Lagerschild 3 abgekehrten Ende des Gehäusemantels 29 des zweiten Gehäuseteiles 7 dichtend fest verbunden ist. Der Gehäusemantel 29 des zweiten Gehäuseteiles 7 übergreift mit einer Stirnseite 41 eine zylindrische Lagerfläche 43 an dem AS-Lagerschild 3 und lagert mit der anderen ringförmig ausgebildeten Stirnseite 45 in einer zylindrischen Lagerausnehmung 47 in dem Zwischenstück 39. Der Rückschlußmantel 35 liegt mit einer Anschlagfläche 49 an dem Zwischenstück 39 an und ist in bekannter Weise mit einem Längsschlitz versehen, um durch die federnde Wirkung eine satte Auflage auf dem Gehäusemantel 29 zu erzielen. Dieser Rückschlußmantel 35 hat einen abgerundeten Rastzapfen 30, der im Rastloch 32 in dem Gehäusemantel 29 festsitzend einrastet. Hierdurch wird der Rückschlußmantel 35 eindeutig fixiert. Diese Gehäusemantel 37, 29 des ersten Gehäuseteiles 25 und des zweiten Gehäuseteiles 7 sind mittels aus Bundschrauben bestehenden Spannschrauben 49, 51 zwischen dem AS-Lagerschild 3 und dem Zwischenstück 39 bzw. zwischen dem BS-Lagerschild 5 und dem Zwischenstück 39 verspannt angeordnet. Die Spannschrauben 49 liegen hierbei nach dem Durchstecken durch eine Lagerbohrung 63 in dem Lagerschild 3 mit dem Bund 65 auf der Oberfläche des Lagerschildes 3 auf, während das andere Ende der Spannschraube 49 mit einem Gewinde 67 in eine Gewindebohrung 69 des Zwischenstückes 39 eingeschraubt ist. Das Festschrauben der Spannschraube 49 erfolgt über einen frei zugänglichen Bundschraubenkopf 71. Die andere Spannschraube 51 liegt mit dem Bund 73 an dem Zwischenstück 39 an, während das andere Ende mit einem Gewinde 77 in einer Gewindebohrung 79 in dem Lagerschild 5 eingeschraubt ist. Das Festziehen der Spannschraube 51 erfolgt über einen frei zugänglichen Bundschraubenkopf 75. Zum Verspannen der Gehäusemantel 25, 29 sind übrigens je zwei Spannschrauben 49, 51 erforderlich, von denen in der Figur 1 lediglich nur jeweils eine Spannschraube dargestellt ist. Das Zwischenstück 39 und das BS-Lagerschild 5 weisen ringförmige Auflageflächen 53, 55 für den diese übergreifenden Gehäusemantel 37 auf.

Die Befestigung des Kleinmotors 1 erfolgt über Befestigungslaschen 57, 59 an dem AS-Lagerschild 3. Das BS-Lagerschild 5 weist eine Durchtrittsöffnung für ein Flachsteckergehäuse 61 auf, über dessen Flachstecker der Strom zu den Wicklungen und zu der Bürstenbrücke geführt wird.

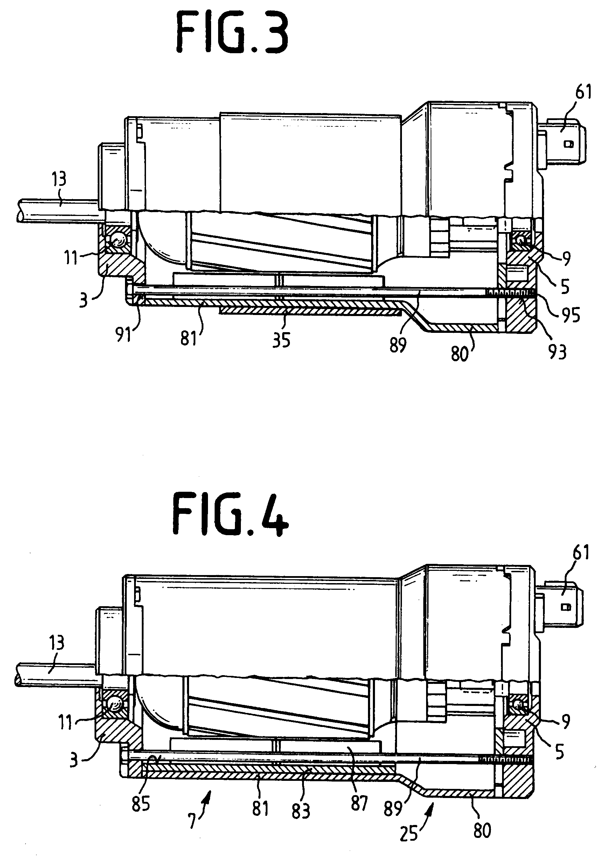

Die Gehäusemantel 37, 29 des ersten Gehäuseteiles 25 und/oder des zweiten Gehäuseteiles 7 und der Rückschlußmantel 35 bestehen gemäß Figur 1 aus gerollten Biegestanzteilen. Im Rahmen der Erfindung ist es gemäß Figur 3 auch möglich, daß der Gehäusemantel 80 des ersten Gehäuseteiles 25 und der Gehäusemantel 81 des zweiten Gehäuseteiles 7 aus einem einstückigen Tiefziehteil gemäß Figur 3 bestehen. Hierbei wird der Rückschlußmantel 35 wieder über den Gehäusemantel 81 aufgeschoben und verriegelt.

Im Rahmen der Erfindung ist das zweite Gehäuseteil 7 in einen äußeren, an einer Stirnseite das AS-Lagerschild 3 aufnehmenden, ferromagnetischen Gehäusemantel 81 und in einen inneren, in den Gehäuseteil 7 eingepreßten, axial geschlitzten und federnden Rückschlußmantel 83 aufgeteilt. Der Rückschlußmantel 83 weist an seiner Innenumfangsfläche 85 die Dauermagnete 87 auf. Die Spannschrauben 89 gemäß den Figuren 3 und 4 verspannen die beiden Lagerschilde 3 und 5 gegeneinander. Zu diesem Zweck weist das Lagerschild 3 zwei Bohrungen 91 zum Durchstecken der Spannschraube 89 auf, während das Lagerschild 5 mit zwei Gewindebohrungen 93 für Gewindebolzen 95 an Spannschrauben 89 versehen ist.

Auch können die Lagerschilde 3, 5 mittels Stemmverbindungen oder sonstiger schraubenloser Verbindungen mit dem aus einem trichterförmigen Tiefziehgehäuse bestehenden Motorgehäuse verbunden werden. In diesem Fall entfallen dann die Spannschrauben.

## Patentansprüche

1. Permanenterregter Kleinmotor, insbesondere in geschlossener Bauart, mit einem nach außen geschlossenen, stirnseitig Lagerschilde aufweisenden, zylindrischen Gehäuse, an dessen Innenumfangsfläche halbschalenförmige Dauermagnete festgelegt sind, und mit einer in den Lagerschilden gelagerten Rotorwelle, welche ein mit einer Rotorwicklung bewickeltes Rotorblechpaket und einen mit verschiebbaren Bürsten in einer Bürstenbrücke zusammenwirkenden Kollektor aufnimmt, **dadurch gekennzeichnet**, daß das zylindrische Gehäuse aus einem kurzen ersten Gehäuseteil (25), das den Teil der Rotorwelle (13) mit dem Kollektor (23) und die Bürstenbrücke (21) umschließt, und einen zu dem Durchmesser des ersten Gehäuseteiles (25) stark verminderten, längeren zylindrischen zweiten Gehäuseteil (7), das den Teil der Rotorwelle (13) mit dem Rotorblechpaket (17) einschließlich der Wicklungsköpfe (27) der Rotorwicklungen (15) überdeckt, besteht.

2. Permanentmagneterregter Kleinmotor nach Anspruch 1, **dadurch gekennzeichnet**, daß das zweite Gehäuseteil (7) in einen inneren, an einer Stirnseite das AS-Lagerschild (3) aufnehmenden ferromagnetischen Gehäusemantel (29), an dessen Innenumfangsfläche (31) die Dauermagnete (33) befestigt sind, und in einen außen aufgespannten, festsitzend gerasteten Rückschlußmantel (35), aufgeteilt ist.

3. Permanenterregter Kleinmotor nach Anspruch 1 oder 2, **dadurch gekennzeichnet**, daß das erste Gehäuseteil (25) einen Gehäusemantel (37) aufweist, welcher an einem Ende durch das BS-Lagerschild (5) geschlossen ist und dessen anderes Ende über ein trichterförmig ausgebildetes Zwischenstück (39) mit dem dem AS-Lagerschild (3) abgekehrten Ende des Gehäusemantels (29) des zweiten Gehäuseteiles (7) fest verbunden ist.

4. Permanenterregter Kleinmotor nach Anspruch 1 oder 2, **dadurch gekennzeichnet**, daß das zweite Gehäuseteil (7) in einen äußeren an einer Stirnseite das AS-Lagerschild (3) aufnehmenden, ferromagnetischen Gehäusemantel (81) und in einen inneren, in den Gehäuseteil (7) eingepreßten, axial geschlitzten und federnden Rückschlußmantel (83), an dessen Innenumfangsfläche (85) die Dauermagnete (87) festsitzend gerastet befestigt sind, aufgeteilt ist.

5. Permanenterregter Kleinmotor nach einem der vorhergehenden Ansprüche, **dadurch gekennzeichnet**, daß die Gehäusemantel (29, 37) des ersten Gehäuseteiles (25) und/oder des zweiten Gehäuseteiles (7) und der festsitzend gerastete Rückschlußmantel (35) aus gerollten Biegestanzteilen bestehen.

6. Permanenterregter Kleinmotor nach einem der vorhergehenden Ansprüche, **dadurch gekennzeichnet**, daß der Gehäusemantel (80) des ersten Gehäuseteiles (25) und der Gehäusemantel (81) des zweiten Gehäuseteiles (7) aus einem einstückigen Tiefziehteil bestehen.

7. Permanenterregter Kleinmotor nach Anspruch 2, **dadurch gekennzeichnet**, daß die Gehäusemantel (37, 29) des ersten Gehäuseteiles (25) und des zweiten Gehäuseteiles (7) mittels Spannschrauben (49, 51) zwischen dem AS-Lagerschild (3) und dem Zwischenstück (39) bzw. zwischen dem BS-Lagerschild (5) und dem Zwischenstück (39) verspannt angeordnet sind.

8. Permanenterregter Kleinmotor nach Anspruch 2 oder 7, **dadurch gekennzeichnet**, daß der Gehäusemantel (29) des zweiten Gehäuseteiles (7) mit einer Stirnseite eine zylindrische Lagerfläche (43) an dem AS-Lagerschild (3) dichtend übergreift und mit der anderen, ringförmigen Stirnseite (45) in einer zylindrischen Lagerausnehmung (47) in dem Zwischenstück (39) lagert.

9. Permanenterregter Kleinmotor nach Anspruch 8, **dadurch gekennzeichnet**, daß der Rückschlußmantel (35) an einer Anschlagfläche (49) des Zwischenstückes (39) anliegt.

10. Permanenterregter Kleinmotor nach einem der vorhergehenden Ansprüche, **dadurch gekennzeichnet**, daß das Zwischenstück (39) und das BS-Lagerschild (5) ringförmige Auflageflächen (53, 55) für den Gehäusemantel (37) aufweisen.
